(19) Europäisches Patentamt
European Patent Office
Office européen des brevets

(11) **EP 3 869 394 B1**

(12) **EUROPEAN PATENT SPECIFICATION**

(45) Date of publication and mention
of the grant of the patent:
**17.04.2024 Bulletin 2024/16**

(21) Application number: **21155834.1**

(22) Date of filing: **08.02.2021**

(51) International Patent Classification (IPC):
**G06V 20/59** *(2022.01)* **B60R 16/037** *(2006.01)*

(52) Cooperative Patent Classification (CPC):
**B60R 16/037; G06V 20/59; G06V 20/593**

(54) **INFORMATION PROCESSING APPARATUS, PROGRAM, AND INFORMATION PROCESSING METHOD**

INFORMATIONSVERARBEITUNGSVORRICHTUNG, PROGRAMM, UND INFORMATIONSVERARBEITUNGSVERFAHREN

APPAREIL DE TRAITEMENT D'INFORMATIONS, PROCÉDÉ DE TRAITEMENT D'INFORMATIONS ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2020 JP 2020026831**

(43) Date of publication of application:
**25.08.2021 Bulletin 2021/34**

(73) Proprietor: **Faurecia Clarion Electronics Co., Ltd. Saitama-shi, Saitama 330-0081 (JP)**

(72) Inventors:
• **NARA, Norikazu**
  **Saitama, 330-0081 (JP)**
• **SAKATA, Naoto**
  **Saitama, 330-0081 (JP)**
• **MURAKAMI, Tetsuro**
  **Saitama, 330-0081 (JP)**

(74) Representative: **Vigand, Philippe et al Novagraaf International SA Chemin de l'Echo 3 1213 Onex - Genève (CH)**

(56) References cited:
**EP-A1- 3 869 394        WO-A1-2019/027433
DE-A1-102019 125 627     DE-T5-112020 007 252
JP-A- 2008 199 515       US-A1- 2014 375 808**

**Description**

BACKGROUND OF THE INVENTION

Field of the Invention

The present invention relates to an information processing apparatus, a program, and an information processing method.

Description of the Related Art

Conventionally, a technique has been known in which an occupant in a vehicle cabin is detected from an image captured by a camera. For example, International Publication No. WO 2019/146043 discloses an occupant detection device that comprises: a face area detection section for executing a process for detecting a plurality of face areas from an image captured by a camera; a first determination section for determining whether or not there is a seat area that includes two or more face areas out of the plurality of face areas; a second determination section for determining whether or not the seat area including the two or more face areas existed for a longer duration than a reference time period; and a warning output control unit for executing control to output a warning when the existence duration exceeds the reference time period. JP2008199515 discloses determining the posture of a passenger. The face image area of a passenger is determined to be within a predetermined allowable value.

When a plurality of face images are detected from a captured image, there are some cases where it is desired to determine a front-and-rear relationship between positions where occupants corresponding to the plurality of face images are seated. For example, in a vehicle, when air conditioning is changed according to a preference of an occupant, it may be desired to determine a front-and-rear relationship between positions where occupants are seated.

The present invention has been made in view of the above-described circumstances, and an object of the present invention is to enhance determination accuracy in determining a front-and-rear relationship between positions where occupants are seated, from a captured image acquired by capturing an inside of a vehicle cabin.

SUMMARY OF THE INVENTION

To solve the problem, an information processing apparatus of the present invention is defined in the appended claims and includes: a detection section that detects a face image of an occupant riding in a vehicle, from a captured image acquired by capturing an inside of a vehicle cabin of the vehicle; and a determination section that, when a plurality of face images are detected by the detection section, determines a front-and-rear relationship between positions where respective occupants corresponding to the plurality of face images are seated, by comparing each of areas of the plurality of detected face images with a determination threshold value, wherein the determination section divides the captured image, in a direction parallel to a longitudinal direction of the vehicle, into a first segment including a driver seat and a second segment including a front passenger seat, and when the plurality of face images are detected in the first segment or the second segment, the determination section determines the front-and-rear relationship between the positions where the respective occupants corresponding to the plurality of face images are seated, by comparing each of the areas of the plurality of face images with the determination threshold value.

Advantageous Effects of Invention

According to the present invention, it is possible to enhance determination accuracy in determining a front-and-rear relationship between positions where occupants are seated, from a captured image acquired by capturing an inside of a vehicle cabin.

BRIEF DESCRIPTION OF THE DRAWINGS

FIG. 1 shows a system configuration of an information communication system;
FIG. 2 shows a configuration of an in-vehicle apparatus;
FIG. 3 shows an example of a seating layout in a vehicle;
FIG. 4 shows a configuration of a server apparatus;
FIG. 5 shows a configuration of a user information table;
FIG. 6 shows a configuration of a face image table;

FIG. 7 shows normal distributions of areas of face images;

FIG. 8 shows a sum of curves representing normal distributions of areas of face images classified into a first row and a second row;

FIG. 9 is a flowchart showing operation of the server apparatus;

FIG. 10 is a flowchart showing details of step S15; and

FIG. 11 shows another configuration of the in-vehicle apparatus.

## DETAILED DESCRIPTION OF THE PREFERRED EMBODIMENT

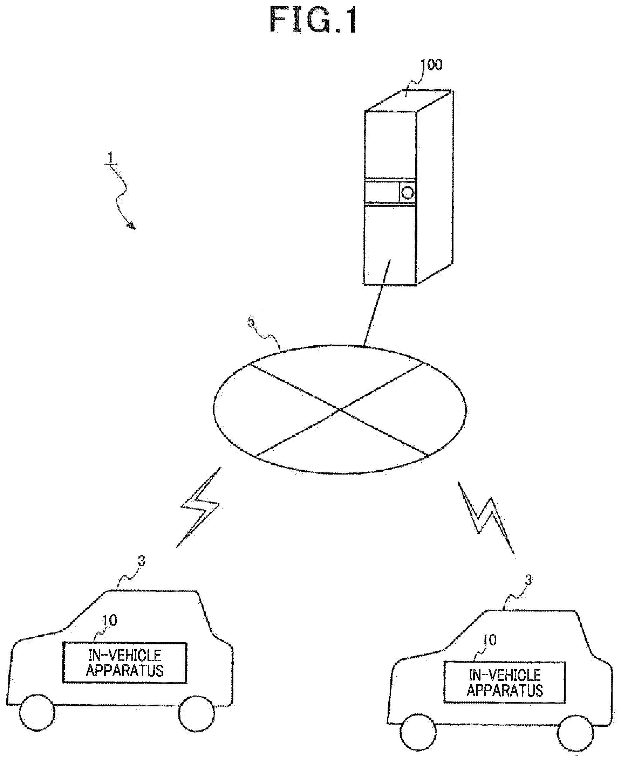

FIG. 1 shows a system configuration of an information communication system 1 to which the present invention is applied.

The information communication system 1 includes an in-vehicle apparatus 10 mounted in a vehicle 3, and a server apparatus 100 that provides a service to the in-vehicle apparatus 10, and has a configuration that enables these apparatuses to mutually communicate data through a communication network 5. The server apparatus 100 corresponds to an information processing apparatus of the present invention. The communication network 5 is built by including, for example, the Internet, a LAN (Local Area Network), a WAN (Wide Area Network) leased communication circuit, a mobile communication network including a base station, or the like.

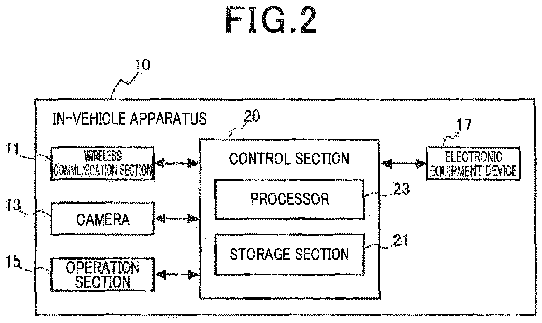

FIG. 2 shows a configuration of the in-vehicle apparatus 10.

The in-vehicle apparatus 10 includes a wireless communication section 11, a camera 13, an operation section 15, an electronic equipment device 17, and a control section 20. The in-vehicle apparatus 10 transmits, to the server apparatus 100, a captured image that is captured by the camera 13 capturing an inside of a vehicle cabin of the vehicle 3, and controls the electronic equipment device 17 based on information received from the server apparatus 100.

The wireless communication section 11 performs communication with the server apparatus 100 in accordance with control by the control section 20, and transmits and receives various data.

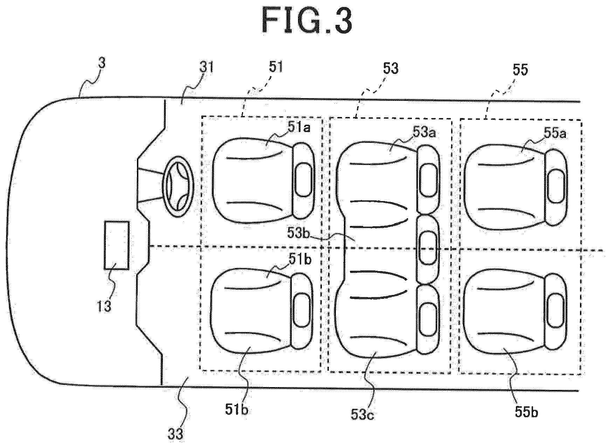

FIG. 3 shows an example of a seating layout in the vehicle 3.

Here, a description will be given of the example of the seating layout of seats included in the vehicle 3. The vehicle 3 in the present embodiment includes 3-row seating including 3 rows, namely a first row 51, a second row 53, and a third row 55. The first row 51 includes two seats, namely a seat 51a and a seat 51b. The second row 53 includes three seats, namely a seat 53a, a seat 53b, and a seat 53c. The third row 55 includes two seats, namely a seat 55a and a seat 55b. In the present embodiment, the first row 51 corresponds to a front row of the present invention. The second row 53 corresponds to a rear row of the present invention.

The camera 13 captures the inside of the vehicle cabin of the vehicle 3. A pointing direction, an angle of view, an installation position, and the like of the camera 13 in the present embodiment are set such that the camera 13 can capture faces of occupants seated in the first row 51 and the second row 53. The camera 13 can be installed, for example, on a dashboard, a rear-view mirror, a ceiling, or the like. Although a description is given of a case where one camera 13 is installed in the vehicle cabin in the present embodiment, a plurality of cameras 13 may be installed in the vehicle cabin. The camera 13 captures the inside of the vehicle cabin in accordance with control by the control section 20, and outputs a generated captured image to the control section 20.

The operation section 15 functions as a reception section that receives an operation made by an occupant. The operation section 15 includes hardware such as a switch and a button, and outputs an operation signal corresponding to a hardware piece that has received an operation to the control section 20.

The electronic equipment device 17 is an electronic device mounted in the vehicle 3, and examples of the electronic equipment device 17 include an air-conditioning device that controls air conditioning in the vehicle cabin, an audio device, a power seat, and the like.

The electronic equipment device 17 operates in accordance with control by the control section 20. For example, the air-conditioning device operates at a temperature and an air volume set by the control section 20, and the audio device plays music selected by the control section 20. The power seat changes a seat position and an angle of a seatback in accordance with control by the control section 20.

The control section 20 is a computer including a storage section 21 and a processor 23.

The storage section 21 includes a memory such as a ROM (read only memory), a RAM (random access memory), or a flash memory. The processor 23 includes a CPU (central processing unit) or an MPU (micro-processing unit).

The storage section 21 stores a computer program to be executed by the processor 23, an in-vehicle apparatus ID that is identification information for identifying the in-vehicle apparatus 10, and a user ID of an occupant who drives the vehicle 3. When a plurality of occupants drive the vehicle 3, the storage section 21 stores a plurality of respective user IDs.

The control section 20 causes the camera 13 to capture an image when a preset condition is fulfilled, and acquires a captured image acquired by capturing the inside of the vehicle cabin. The control section 20 transmits an identification request including the acquired captured image to the server apparatus 100 via the communication network 5. The identification request is a request for identifying an occupant or occupants captured in the captured image and acquiring information related to the identified occupant or occupants. In addition to the captured image, the identification request includes the in-vehicle apparatus ID. Examples of the preset condition include a case where the operation section 15 receives an operation, and a case where a door lock is unlocked and a predetermined time period has passed since the door lock was locked. Moreover, a sensor for sensing that an occupant is seated may be provided to each seat of the vehicle 3, and the examples of the preset condition may include a case where it is sensed by the sensor that an occupant is seated on a seat.

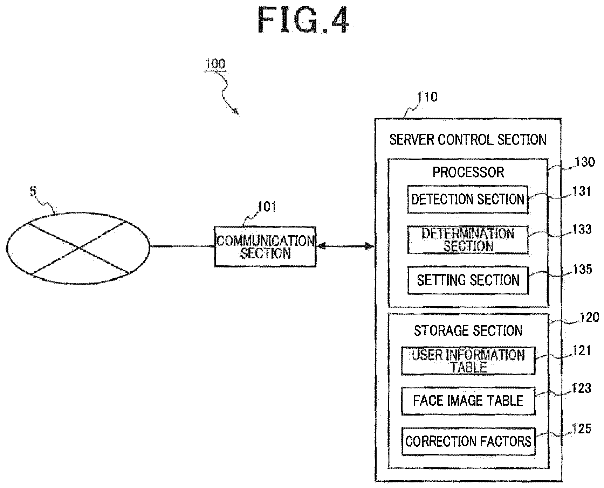

FIG. 4 shows a configuration of the server apparatus 100.

The server apparatus 100 includes a communication section 101 and a server control section 110, and provides services to the in-vehicle apparatus 10. The services provided by the server apparatus 100 include, for example, a service of receiving a captured image from the in-vehicle apparatus 10 and identifying an occupant captured in the received captured image. Moreover, the services include a service of notifying the in-vehicle apparatus 10 of a music piece, a seat position, an angle of a seatback, a temperature of the air-conditioning device, and the like that are preferred by the identified occupant.

The communication section 101 is connected to the communication network 5 and mutually communicates data with the in-vehicle apparatus 10 in accordance with control by the server control section 110.

The server control section 110 is a computer including a storage section 120 and a processor 130. The storage section 120 includes a memory such as a ROM or a RAM and a storage device such as an HDD (Hard Disk Drive) or an SSD (Solid State Drive).

The storage section 120 stores a user information table 121, a face image table 123, and correction factors 125, in addition to a computer program to be executed by the processor 130.

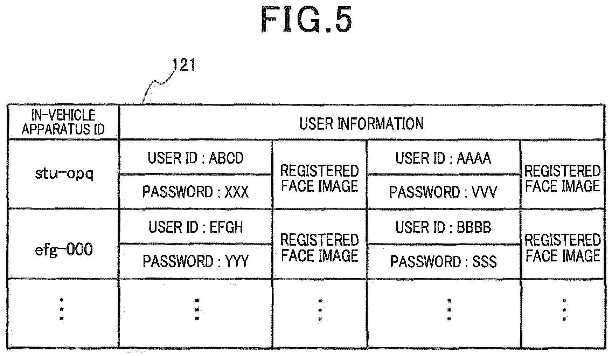

FIG. 5 shows a configuration of the user information table 121.

The user information table 121 is a table in which personal identification information on a driver who drives the vehicle 3 and a registered face image that is a face image of the driver are registered in association with the in-vehicle apparatus ID for identifying the vehicle 3. The personal identification information and the registered face image are collectively referred to as user information. The personal identification information includes a user ID and a password.

For example, by using a mobile terminal such as a smartphone, a user of the present system transmits the user ID and the password, which are the personal identification information, and the face image captured by using the mobile terminal to the server apparatus 100 and registers the user information.

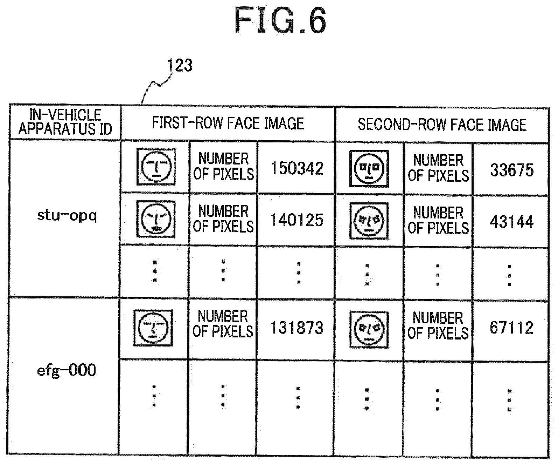

FIG. 6 shows a configuration of the face image table 123.

In the face image table 123, a face image detected from a captured image captured by the camera 13 is registered in association with the in-vehicle apparatus ID for identifying the vehicle 3 in which the camera 13 is mounted. A first row face image and a second row face image are registered as face images in the face image table 123. The server control section 110 divides the captured image captured by the camera 13 into two segments, namely a first segment 31 and a second segment 33. The server control section 110 divides the captured image into the first segment 31 and the second segment 33, in a direction parallel to a longitudinal direction of the vehicle 3. The first segment 31 is a segment including a driver seat as shown in FIG. 3, and the second segment 33 is a segment including a front passenger seat as shown in FIG. 3. The server control section 110 detects a face image in the first segment 31 and the second segment 33, and when two face images are detected in a single segment, registers the face images in the face image table 123. Of the two detected face images, the server control section 110 classifies a face image with a larger area as a first row face image and registers the face image in the face image table 123, and classifies a face image with a smaller area as a second row face image and registers the face image in the face image table 123.

Moreover, the number of pixels representing an area of each registered face image is registered in the face image table 123, in association with a corresponding face image.

The correction factors 125 are factors that correct areas of face images captured in captured images.

The storage section 120 stores the correction factors 125 according to a gender, an age, and an orientation of a captured face of an occupant captured in a captured image, respectively.

When a captured face image is of a face of a woman, for example, "1.2" is prepared as a correction factor 125 increasing an area of a face image. The server control section 110 may determine a gender of an occupant based on a length of hair included in a detected face image, or may determine a gender of an occupant by detecting, from a face image, feature points such as an end point of a left eye, an end point of a right eye, a tip of a nose, a left end of a mouth, a right end of the mouth, and a bottom of a chin.

When it is determined that an age of a captured face image is equal to or lower than a set value (for example, 10 years old or lower), for example, "1.5" is prepared as a correction factor 125 increasing an area of a face image. The server control section 110 determines that an age of an occupant corresponding to a detected face image is equal to or lower than the set value when a size (the number of pixels) of the detected face image is smaller than a predetermined value.

Further, a correction factor 125 is prepared that is used when an orientation of a captured face image, for example, at least one of a roll angle, a pitch angle, and a yaw angle is equal to or larger than a set angle. For example, the server control section 110 may detect, from a detected face image, feature points such as an end point of a left eye, an end point of a right eye, a tip of a nose, a left end of a mouth, a right end of the mouth, and a bottom of a chin, and may determine the roll angle, the pitch angle, and the yaw angle, based on positional relationships between the detected feature points.

The processor 130 includes a CPU or an MPU. The processor 130 executes the computer program stored in the storage section 120, whereby the server control section 110 implements various functional components. The server control section 110 includes, as the functional components, a detection section 131, a determination section 133, and a setting section 135.

When an identification request is received from the in-vehicle apparatus 10, the detection section 131 acquires a captured image included in the received identification request. The detection section 131 divides the acquired captured image into the two segments, namely the first segment 31 and the second segment 33. The detection section 131 performs face image detection in each of the first segment 31 and the second segment 33.

Any method may be used for the face image detection. For example, the detection section 131 may detect a face image by detecting feature points such as eyes, eyebrows, a nose, and a mouth included in a captured image. The detection section 131 may perform template matching in which a prepared template image is moved on a captured image, and a segment that matches the template image with a matching degree equal to or higher than a threshold value is detected as a face image.

The detection section 131 extracts, from the captured image, an image in a predetermined range including a detected face of an occupant, as a face image. In the present embodiment, the detection section 131 extracts a rectangular image including a face of an occupant, as a face image. The detection section 131 outputs the extracted face image to the determination section 133.

When a face image is detected by the detection section 131, the determination section 133 determines whether an occupant corresponding the detected face image is seated on a seat in the first row 51, or is seated on a seat in the second row 53. The determination section 133 determines whether the occupant corresponding the detected face image is seated on a seat in the first row 51, or is seated on a seat in the second row 53, by using a determination threshold value set by the setting section 135.

First, the determination section 133 calculates an area of the face image detected by the detection section 131. Specifically, the determination section 133 counts the number of pixels of the face image, and uses the number of pixels that is a result of the counting, for the area of the face image.

Subsequently, the determination section 133 determines a gender, an age, an orientation of a face, and the like of the occupant corresponding to the face image of which the area is calculated. When the occupant corresponding to the face image is determined to be a woman, or is determined to be of an age equal to or lower than the set value, or when at least one of the roll angle, the pitch angle, and the yaw angle that indicate the orientation of the face is equal to or larger than the set angle, the determination section 133 corrects the number of pixels representing the area of the face image, by using a corresponding correction factor 125.

Subsequently, the determination section 133 compares the calculated area of the face image with the determination threshold value. When the number of pixels representing the area of the face image is equal to or smaller than the determination threshold value, the determination section 133 determines that the occupant corresponding to the face image is seated in the second row 53. When the number of pixels representing the area of the face image is larger than the determination threshold value, the determination section 133 determines that the occupant corresponding to the face image is seated in the first row 51.

Moreover, when the setting section 135 does not generate the determination threshold value, the determination section 133 notifies "under learning" to the in-vehicle apparatus 10. The learning means learning for generating the determination threshold value to determine, based on an area of a face image, whether an occupant is seated in the first row 51, or is seated in the second row 53.

The setting section 135 sets the determination threshold value. The determination threshold value is a threshold value to determine, based on an area of a face image, whether an occupant corresponding to the face image detected from a captured image is seated on a seat in the first row 51, or is seated on a seat in the second row 53.

An area of a face image of an occupant seated in the first row 51 and an area of a face image of an occupant seated in the second row 53 are inversely proportional to a square of a distance from the camera 13. The distance between the camera 13 and an occupant varies depending on an installation position of the camera 13 and a vehicle type. In order to estimate the distance to an occupant based on a captured image captured by the camera 13, preliminary calibration is required, and is tiresome work to a user.

Accordingly, in the present embodiment, the setting section 135 sets the determination threshold value to distinguish between a face image of an occupant seated in the first row 51 and a face image of an occupant seated in second row 53, through a procedure, which will be described later. Then, using the determination threshold value set by the setting section 135, the determination section 133 determines whether an occupant corresponding to a face image detected from a captured image is seated in the first row 51, or is seated in the second row 53.

First, when two face images are detected in a captured image included in an identification request, the setting section 135 obtains the numbers of pixels representing areas of the detected face images, respectively. The setting section 135 compares the numbers of pixels of the two face images. The setting section 135 classifies a face image with the larger number of pixels and that number of pixels of the face image as a first row face image, and registers it in the face image table 123. The setting section 135 registers the face image and the number of pixels in the face image table 123, in association with an in-vehicle apparatus ID included in the identification request.

Moreover, of the two face images, the setting section 135 classifies a face image with the smaller number of pixels and that number of pixels of the face image as a second row face image, and registers it in the face image table 123. The setting section 135 registers the face image and the number of pixels in the face image table 123, in association with the in-vehicle apparatus ID included in the identification request.

Subsequently, the setting section 135 sets the determination threshold value. The setting section 135 sets the determination threshold value, based on a distribution of areas of first row face images and a distribution of areas of second row face images.

First, the setting section 135 calculates an average (mean) value and a standard deviation of the numbers of pixels of first row face images registered in the face image table 123 in association with the in-vehicle apparatus ID acquired from the identification request. Similarly, the setting section 135 calculates an average (mean) value and a standard deviation of the numbers of pixels of second row face images registered in the face image table 123 in association with the in-vehicle apparatus ID acquired from the identification request.

The setting section 135 calculates a probability density function, based on the generated average value and standard deviation of the numbers of pixels of the first row face images. Based on the calculated probability density function, the setting section 135 expands a curve 71 representing a normal distribution of the areas of the first row face images, on the memory included in the storage section 120. The normal distribution of the areas of the first row face images corresponds to a first normal distribution of the present invention.

Moreover, the setting section 135 calculates a probability density function, based on the generated average value and standard deviation of the numbers of pixels of the second row face images. Based on the calculated probability density function, the setting section 135 expands a curve 73 representing a normal distribution of the areas of the second row face images, on the memory included in the storage section 120. The normal distribution of the areas of the second row face images corresponds to a second normal distribution of the present invention.

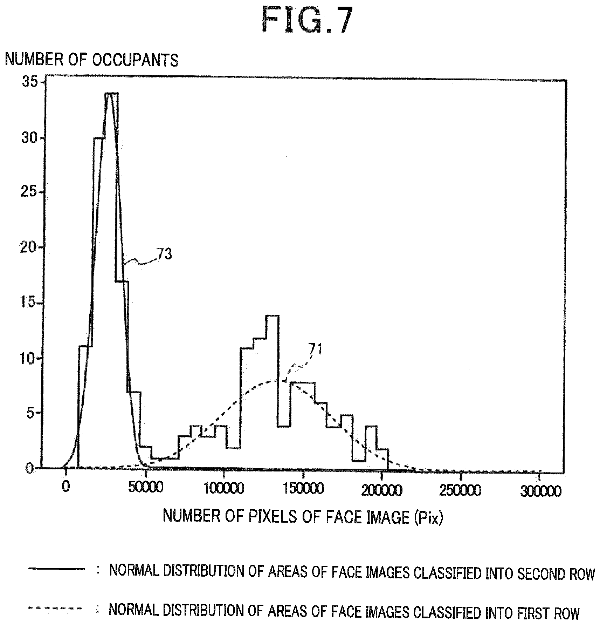

FIG. 7 shows normal distributions of areas of face images.

The curve 71 denoted by a broken line in FIG. 7 represents the normal distribution of the areas of the face images classified into the first row 51. The curve 73 denoted by a solid line in FIG. 7 represents the normal distribution of the areas of the face images classified into the second row 53. In FIG. 7, a vertical axis shows the number of occupants, and a horizonal axis shows the number of pixels of a face image.

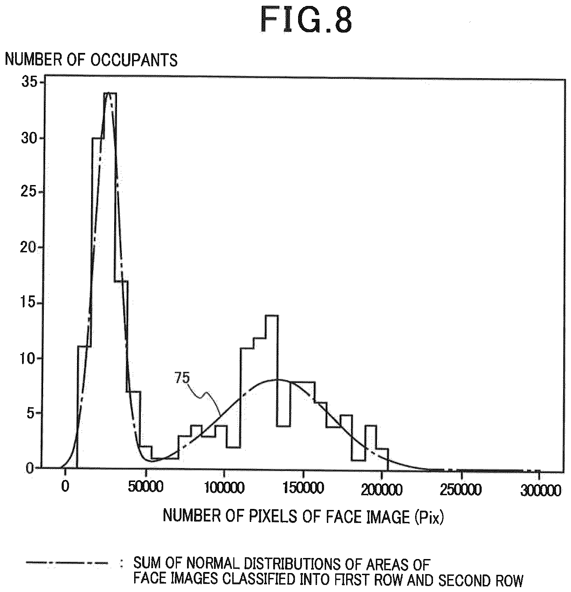

FIG. 8 shows a curve 75 representing a sum of the normal distribution of the areas of the face images classified into the first row 51 and the normal distribution of the areas of the face images classified into the second row 53.

The curve 75 shown in FIG. 8 represents the sum of the normal distribution of the areas of the face images classified into the first row 51 and the normal distribution of the areas of the face images classified into the second row 53. In other words, the curve 75 represents the sum of the curve 71 and the curve 73 shown in FIG. 7.

When the sum of the two normal distributions is obtained, the setting section 135 determines the number of pixels at which the number of occupants takes a minimum value on the curve 75 representing the obtained sum of the normal distributions. When the number of pixels at which the number of occupants takes a minimum value cannot be detected, the setting section 135 outputs an error. When the number of pixels at which the number of occupants takes a minimum value is detected, the setting section 135 sets the detected number of pixels as the determination threshold value.

Subsequently, the setting section 135 calculates a confidence value C(T), with respect to the set determination threshold value.

The setting section 135 calculates the confidence value C(T), based on an expression (1) shown below.

In the expression (1), T is the determination threshold value. $\mu_F$ is the average (mean) value of the areas of the face images in the first row 51. $\sigma_F$ is the standard deviation of the areas of the face images in the first row 51. $\mu_R$ is the average (mean) value of the areas of the face images in the second row 53. $\sigma_R$ is the standard deviation of the areas of the face images in the second row 53. f(x) is a probability density function representing the sum of the normal distribution of the areas of the face images classified into the first row 51 and the normal distribution of the areas of the face images classified into the second row 53, and x is the number of pixels.

[Expression 1]

$$C(T) = 100 \times \min \left[ \int_{\frac{T-\mu_F}{\sigma_F}}^{\infty} f(x)\,dx, \ \int_{-\infty}^{\frac{T-\mu_R}{\sigma_R}} f(x)\,dx \right] \quad \cdots (1)$$

The setting section 135 compares the generated value of C(T) with a preset reference value, and when the value of C(T) is smaller than the reference value, determines that a face image of an occupant seated in the first row 51 and a face image of an occupant seated in the second row 53 cannot be distinguished based on the determination threshold value. In such a case, the setting section 135 notifies "under learning" to the in-vehicle apparatus 10.

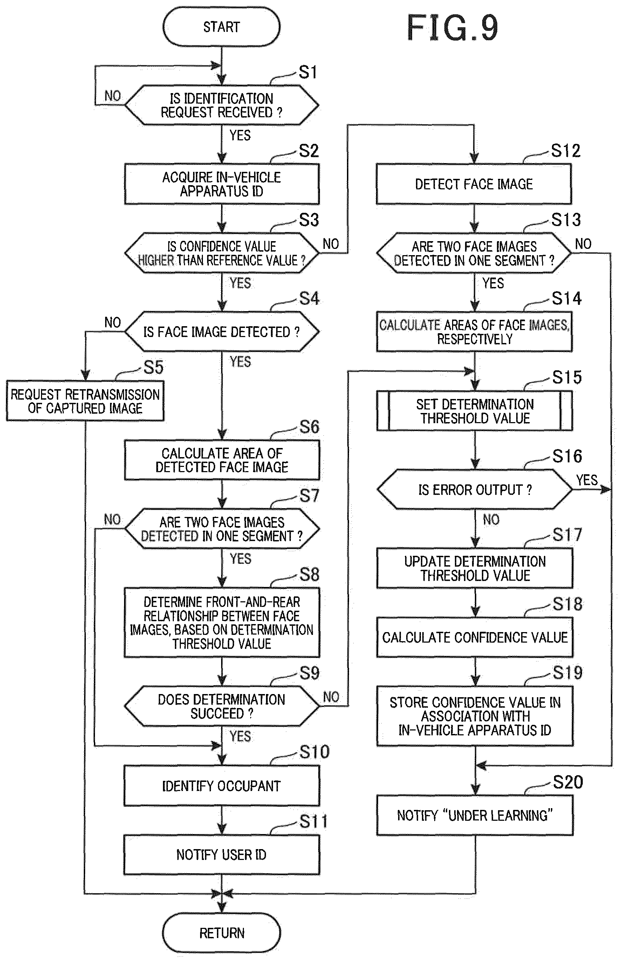

FIG. 9 is a flowchart showing operation of the server apparatus 100.

The operation of the server apparatus 100 will be described with reference to the flowchart shown in FIG. 9.

First, the server control section 110 determines whether or not an identification request is received from the in-vehicle apparatus 10 (step S1). When an identification request is not received (step S1: NO), the server control section 110 waits until an identification request is received, without starting processing.

When an identification request is received (step S1: YES), the server control section 110 acquires an in-vehicle apparatus ID included in the identification request (step S2). The server control section 110 acquires a confidence value stored in the storage section 120 in association with the acquired in-vehicle apparatus ID, and determines whether or not a value of the acquired confidence value is larger than the reference value (step S3).

When the value of the acquired confidence value is larger than the reference value (step S3: YES), the server control section 110 acquires a captured image included in the identification request, and detects a face image by analyzing the acquired captured image (step S4). Step S4 corresponds to a detection procedure and a detection step of the present invention. When a face image cannot be detected from the captured image (step S4: NO), the server control section 110 requests the in-vehicle apparatus 10 from which the identification request is received to retransmit a captured image (step S5).

When a face image is detected from the captured image (step S4: YES), the server control section 110 calculates the number of pixels that is an area of the detected face image (step S6). Here, when a plurality of face images are detected from the captured image, the server control section 110 calculates areas of the plurality of detected face images, respectively.

Subsequently, the server control section 110 determines whether or not two face images are detected from the first segment 31 or the second segment 33 of the captured image (step S7). The server control section 110 determines whether or not two face images are detected from the first segment 31 that is a segment on a driver seat side of the vehicle cabin, or from the second segment 33 that is seating on a front passenger seat side. When two face images are not detected from the first segment 31 or the second segment 33 of the captured image (step S7: NO), the server control section 110 extracts a feature amount from the face image detected in step S4, and identifies an occupant based on the extracted feature amount (step S10). The server control section 110 notifies a user ID of the identified occupant to the in-vehicle apparatus 10 (step S11).

When two face images are detected from the first segment 31 or the second segment 33 of the captured image (step S7: YES), the server control section 110 determines a front-and-rear relationship between the face images by comparing each of the areas of the plurality of detected face images with the determination threshold value (step S8). In other words, the server control section 110 determines that a face image whose area is equal to or smaller than the determination threshold value is a face image of an occupant seated in the second row 53. The server control section 110 determines that a face image whose area is larger than the determination threshold value is a face image of an occupant seated in the first row 51. Step S8 corresponds to a determination procedure and a determination step of the present invention.

Subsequently, the server control section 110 determines whether or not the determination of the front-and-rear relationship between the face images succeeds (step S9). The server control section 110 determines that the determination fails (step S9: NO), for example, when it is determined that the two face images are face images of occupants seated in the first row 51, or when it is determined that the two face images are face images of occupants seated in the second row 53. The server control section 110 determines that the determination succeeds when the two face images are separated into a face image of an occupant seated in the first row 51 and a face image of an occupant seated in the second row 53 (step S9: YES).

When it is determined that the determination succeeds, the server control section 110 extracts a feature amount from each of the face images, and identifies occupants based on the respective extracted feature amounts (step S10). The server control section 110 notifies the in-vehicle apparatus 10 of user IDs of the identified occupants and information indicating whether the occupant indicated by each of the user IDs is seated on a seat in the first row 51, or is seated on a seat in the second row 53 (step S11). When it is determined that the determination fails (step S9: NO), the server control section 110 moves to processing in step S15, and resets the determination threshold value. The processing in and after step S15 will be described later.

It is determined in the determination in step S3 that the confidence value is not higher than the reference value (step S3: NO), the server control section 110 acquires a captured image included in the identification request, and detects a face image from the acquired captured image (step S12). When a face image is detected from the captured image, the server control section 110 determines whether or not two face images are detected from the first segment 31 or the second segment 33 of the captured image (step S13).

When two face images are not detected from the first segment 31 or the second segment 33 of the captured image (step S13: NO), the server control section 110 notifies "under learning of the determination threshold value" to the in-vehicle apparatus 10 (step S20), and terminates the processing flow.

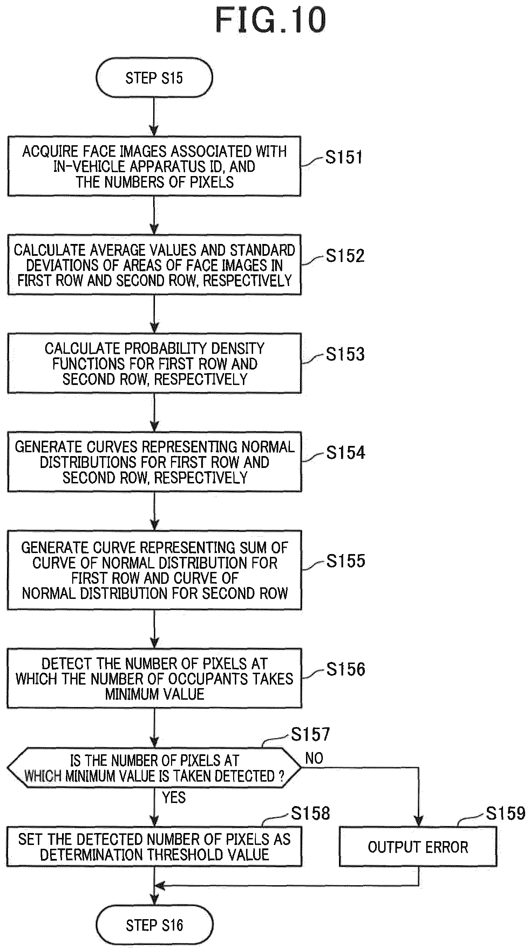

When two face images are detected from the first segment 31 or the second segment 33 of the captured image (step S13: YES), the server control section 110 calculates the numbers of pixels that are areas of the detected face images, respectively (step S14). When the areas of the face images are calculated, respectively, the server control section 110 sets the determination threshold value, based on the calculated areas of the face images, face images registered in the face image table 123, and the like (step S15). Details of step S15 will be described with reference to a flowchart shown in FIG. 10.

Subsequently, the server control section 110 determines whether or not the determination threshold value cannot be set through the processing in step S15 and a result of the processing in step S15 is output as an error (step S16). When the result of the processing in step S15 is output as an error (step S16: YES), the server control section 110 notifies "under learning of the determination threshold value" to the in-vehicle apparatus 10 (step S20), and terminates the processing flow.

When the result of the processing in step S15 is not output as an error (step S16: NO), that is, when the determination threshold value can be set, the server control section 110 updates the determination threshold value used in the determination in step S8 to the set determination threshold value (step S17). Thereafter, the server control section 110 calculates a confidence value based on the above-described expression (1) (step S18), and stores the calculated confidence value in the storage section 120 in association with the in-vehicle apparatus ID (step S19). Thereafter, the server control section 110 notifies "under learning of the determination threshold value" to the in-vehicle apparatus 10 (step S20), and terminates the processing flow.

FIG. 10 is a flowchart showing a detailed procedure of step S15 in FIG. 9.

The detailed procedure of step S15 will be described with reference to the flowchart shown in FIG. 10.

First, the server control section 110 acquires face images registered in the face image table 123 in association with the in-vehicle apparatus ID acquired in step S2, and the numbers of pixels representing respective areas of the face images (step S151).

The server control section 110 calculates an average value and a standard deviation of areas of face images classified into the first row 51, and calculates an average value and a standard deviation of areas of face images classified into the second row 53 (step S152).

Subsequently, the server control section 110 calculates a probability density function for each of the first row 51 and the second row 53, based on the respective calculated average values and standard deviations of the areas of the face images (step S153). Based on the calculated probability density functions, the server control section 110 expands the curve 71 representing a normal distribution of the areas of the face images classified into the first row 51, and the curve 73 representing a normal distribution of the areas of the face images classified into the second row 53, respectively, on the memory of the storage section 120 (step S154).

Subsequently, the server control section 110 calculates a sum of the curve 71 representing the normal distribution of the areas of the face images classified into the first row 51 and the curve 73 representing the normal distribution of the areas of the face images classified into the second row 53, and expands the curve 75 representing the calculated sum, on the memory of the storage section 120 (step S155).

When the curve 75 representing the sum of the curve 71 and the curve 73 representing the normal distributions is generated, the server control section 110 detects, on the curve 75, the number of pixels at which the number of occupants takes a minimum value (step S156).

Subsequently, the server control section 110 determines whether or not the number of pixels at which the number of occupants takes a minimum value can be detected (step S157). When the number of pixels at which the number of occupants takes a minimum value cannot be detected (step S157: NO), the server control section 110 outputs an error (step S159). When the number of pixels at which the number of occupants takes a minimum value can be detected (step S157: YES), the server control section 110 sets the number of pixels as the determination threshold value (step S158).

The above description is given of a case where determination is performed as to a front-and-rear relationship between a face image of an occupant seated in the first row 51 and a face image of an occupant seated in the second row 53. The determination of a front-and-rear relationship between positions based on areas of face images is not limited to the determination of the first row 51 and the second row 53, but may be performed with respect to a face image of an occupant seated in the second row 53 and a face image of an occupant seated in the third row 55. In such a case, the second row 53 corresponds to the front row of the present invention. The third row 55 corresponds to the rear row of the present invention.

As described above, the server apparatus 100 in the present embodiment includes the detection section 131 and the determination section 133.

The detection section 131 detects a face image of an occupant riding in the vehicle 3, from a captured image acquired by capturing the inside of the vehicle cabin of the vehicle 3.

When a plurality of face images are detected by the detection section 131, the determination section 133 determines a front-and-rear relationship between positions where respective occupants corresponding to the plurality of face images are seated, by comparing each of areas of the plurality of detected face images with the determination threshold value.

The detection section 131 divides the captured image, in the direction parallel to the longitudinal direction of the vehicle 3, into the first segment 31 including the driver seat and the second segment 33 including the front passenger seat. When the plurality of face images are detected in the first segment 31 or the second segment 33, the determination section 133 determines the front-and-rear relationship between the positions where the respective occupants corresponding to the plurality of face images are seated, by comparing each of the areas of the plurality of face images with the determination threshold value.

Accordingly, by comparing each of areas of a plurality of detected face images with the determination threshold value, it can be determined whether a position where an occupant corresponding to each detected face image is seated is in the front row, or is in the rear row. Thus, it is possible to enhance accuracy in determining a front-and-rear relationship between positions where occupants are seated.

Moreover, the server apparatus 100 includes the setting section 135 that sets the determination threshold value. The setting section 135 resets the determination threshold value when a front-and-rear relationship between positions where respective occupants corresponding to a plurality of face images are seated cannot be determined as a result of comparing each of areas of the plurality of detected face images with the determination threshold value.

Accordingly, when a front-and-rear relationship between positions where occupants are seated cannot be determined, the determination threshold value is reset, whereby it is possible to enhance accuracy in determining a front-and-rear relationship between positions where occupants are seated.

Further, the server apparatus 100 includes the storage section 120 that stores a plurality of face images detected from a plurality of captured images.

The server apparatus 100 classifies a plurality of face images detected from one captured image into the front row and the rear row, based on a magnitude relationship between areas of the plurality of face images, and stores in the storage section 120.

The setting section 135 sets the determination threshold value, based on a distribution of the areas of the face images classified into the front row, and a distribution of the areas of the face images classified into the rear row.

Accordingly, by comparing an area of a face image with the determination threshold value, it is possible to enhance accuracy in determining whether a position where an occupant corresponding to the detected face image is seated is in the front row, or is in the rear row.

The setting section 135 generates the first normal distribution of the areas of the face images classified into the front row, based on the average value and the standard deviation of the areas of the face images classified into the front row, and generates the second normal distribution of the areas of the face images classified into the rear row, based on the average value and the standard deviation of the areas of the face images classified into the rear row.

The setting section 135 generates the determination threshold value, based on the generated first normal distribution and second normal distribution.

Accordingly, the determination threshold value with high accuracy can be generated, and it is possible to further enhance accuracy in determining a front-and-rear relationship between positions where occupants are seated.

[Modification example 1]

In modification example 1, the determination threshold value is calculated by a different method from the method in the above-described embodiment. In modification example 1, when two face images are detected from a captured image, the server control section 110 obtains areas of the two detected face images, respectively, and registers the obtained areas of the face images in the face image table 123. At the time, the server control section 110 registers the areas of the face images in the face image table 123, without classifying the two detected face images into the first row 51 and the second row 53. The server control section 110 obtains an average value of the registered areas of the face images, and sets the obtained average value of the areas of the face images as a determination threshold value. In modification example 1, calculation of the determination threshold value is facilitated, and time required to set the determination threshold value can be reduced.

[Modification example 2]

Modification example 2 is an example in which it is determined which one of the first row 51, the second row 53, and the third row 55 an occupant corresponding to a face image in a captured image is seated in. In other words, in this modification example, the server control section 110 generates a first determination threshold value to determine a face image of an occupant seated in the first row 51 and a face image of an occupant seated in the second row 53, and a second determination threshold value to determine a face image of an occupant seated in the second row 53 and a face image of an occupant seated in the third row 55. In modification example 2, the first row 51 corresponds to the front row of the present invention. The second row 53 and the third row 55 correspond to the rear row of the present invention.

In modification example 2, the pointing direction, the angle of view, the installation position, and the like of the camera 13 are set such that the camera 13 can capture the first row 51, the second row 53, and the third row 55.

The server control section 110 follows the procedures shown in the flowcharts in FIGS. 9 and 10, and when three face images are detected from the first segment 31 or the second segment 33 of a captured image, registers the detected face images in the face image table 123 as shown in FIG. 6. In other words, in the face image table 123, a first row face image, a second row face image, and a third row face image are individually registered in association with the respective numbers of pixels of the face images.

The server control section 110 follows the flowchart shown in FIG. 10 and obtains an average value and a standard deviation of the numbers of pixels of face images, with respect to face images classified into the first row 51, face images classified into the second row 53, and face images classified into the third row 55 individually. The server control section 110 calculates respective probability density functions, based on the obtained average values and standard deviations of the numbers of pixels of the face images, respectively.

The server control section 110 generates the curve 71 representing the first normal distribution, on the memory of the storage section 120, from the probability density function calculated based on the average value and the standard deviation of the numbers of pixels of the face images classified into the first row 51. The server control section 110 generates the curve 73 representing the second normal distribution, on the memory of the storage section 120, from the probability density function calculated based on the average value and the standard deviation of the numbers of pixels of the face images classified into the second row 53. The server control section 110 generates a curve representing a third normal distribution, on the memory of the storage section 120, from the probability density function calculated based on the average value and the standard deviation of the numbers of pixels of the face images classified into the third row 55.

Moreover, the server control section 110 calculates a sum of the three curves of the first normal distribution, the second normal distribution, and the third normal distribution, and determines the number of pixels at which the number of occupants takes a minimum value on a curve of the calculated sum. Here, as such minimum values, two minimum values are detected, namely a minimum value that is a boundary value between the numbers of pixels of the face images classified into the first row 51 and the numbers of pixels of the face images classified into the second row 53, and a minimum value that is a boundary value between the numbers of pixels of the face images classified into the second row 53 and the numbers of pixels of the face images classified into the third row 55. The server control section 110 sets the minimum value that is the boundary value between the numbers of pixels of the face images classified into the first row 51 and the numbers of pixels of the face images classified into the second row 53, as the first determination threshold value. Further, the server control section 110 sets the minimum value that is the boundary value between the numbers of pixels of the face images classified into the second row 53 and the numbers of pixels of the face images classified into the third row 55, as the second determination threshold value.

It may be rare cases that occupants are seated in all of the three rows of the vehicle 3, depending on a family composition of a user. For example, a conceivable case is that users are seated in the first row 51 and the second row 53, or in the first row 51 and the third row 55. In such a case, when two face images are detected from a captured image, the server control section 110 may calculate the numbers of pixels that are areas of the detected face images, respectively, and may register the face images and the calculated numbers of pixels in the face image table 123, as in the above-described embodiment.

In such a case, the determination threshold value generated by the server control section 110 is a threshold value to determine a face image of an occupant seated in the first row 51 and a face image of an occupant seated in the second row 53, or a threshold value to determine a face image of an occupant seated in the first row 51 and a face image of an occupant seated in the third row 55. In other words, when users are seated in the first row 51 and the second row 53 of the vehicle 3 in more cases than the users are seated in the first row 51 and the third row 55, generated is the

10

determination threshold value to determine a face image of an occupant seated in the first row 51 and a face image of an occupant seated in the second row 53. When users are seated in the first row 51 and the third row 55 of the vehicle 3 in more cases than the users are seated in the first row 51 and the second row 53, generated is the determination threshold value to determine a face image of an occupant seated in the first row 51 and a face image of an occupant seated in the third row 55.

[Modification example 3]

In modification example 3, when a front-and-rear relationship between face images is determined in step S8 of the flowchart shown in FIG. 9, the determination is performed, with seat information on the vehicle 3 being taken into consideration.

The seat information on the vehicle 3 is information indicating the number of rows of seats mounted in the vehicle 3 and the number of seats in each row. For example, in the case of the seating layout shown in FIG. 3, the vehicle 3 includes three rows of seats, namely the first row 51, the second row 53, and the third row 55, and the number of seats in the first row 51 is two, the number of seats in the second row 53 is three, and the number of seats in the third row 55 is two. The seat information on the vehicle 3 may be input by a user operating the operation section 15 when the in-vehicle apparatus 10 is installed in the vehicle 3, or the like, or the in-vehicle apparatus 10 may download the seat information on the vehicle 3 from another server apparatus. The control section 20 of the in-vehicle apparatus 10 stores the acquired seat information on the vehicle 3 into the storage section 21. When transmitting an identification request to the server apparatus 100, the control section 20 reads the seat information on the vehicle 3 from the storage section 21, and transmits the seat information together with the identification request to the server apparatus 100.

Instead of the seat information on the vehicle 3, vehicle type information for identifying a vehicle type of the vehicle 3 may be stored in the storage section 21 of the in-vehicle apparatus 10. When transmitting an identification request to the server apparatus 100, the in-vehicle apparatus 10 transmits the vehicle type information together with the identification request to the server apparatus 100. The server apparatus 100 acquires the seat information from another server apparatus, or reads the seat information from the storage section 120, based on the received vehicle type information.

For example, it is assumed that occupants are seated on the seats 51a, 51b in the first row 51 and on the seats 53a, 53b in the second row 53 in the vehicle 3. In such a case, the number of face images detected in step S4 of the flowchart shown in FIG. 9 is four.

In modification example 3, the server control section 110 performs determination, based on the number of the detected face images and the seat information on the vehicle 3 in combination.

For example, it is assumed that the server control section 110 determines, based on the determination threshold value, that the number of face images of occupants seated in the first row 51 is one, and that the number of face images of occupants seated in the second row 53 is two. In such a case, since the number of seats in the second row 53 indicated by the seat information on the vehicle 3 is three, the server control section 110 determines that the maximum number of face images classified into the second row 53 is two in the first segment 31. Accordingly, even when it is determined that the number of face images of occupants seated in the second row is two, the server control section 110 determines that the determination of a front-and-rear relationship between the face images succeeds.

Moreover, it is assumed that the server control section 110 determines that two face images are face images of occupants seated in the first row 51. In such a case, since the number of seats in the first row 51 indicated by the seat information on the vehicle 3 is two, the server control section 110 determines that the maximum number of face images classified into the first row 51 is one in the first segment 31. Accordingly, when it is determined that the number of face images of occupants seated in the first row is two, the server apparatus 100 determines that the determination of a front-and-rear relationship between the face images fails.

The above-described embodiment is only an example of an aspect of the present invention, and arbitrary modifications and applications can be made within the scope that does not depart from the principles of the present invention. For example, in the above-described embodiment, the number of pixels at a point of intersection of the curve 71, which represents a normal distribution of areas of face images classified as first row face images, and the curve 73, which represents a normal distribution of areas of face images classified as second row face images, may be set as the determination threshold value.

The configuration of the in-vehicle apparatus 10 shown in FIG. 2 and the configuration of the server apparatus 100 shown in FIG. 4 are schematic diagrams in which the functions included in the apparatuses are classified based on main processing contents. The configurations of the in-vehicle apparatus 10 and the server apparatus 100 can also be divided into further more blocks, based on processing contents. The functional blocks may be configured such that further more processing is performed by a single block shown in FIGS. 2 and 4. Processing performed by each block may be performed by a single hardware piece, or may be performed by a plurality of hardware pieces. The processing performed by each block may be implemented by using a single program, or may be implemented by using a plurality of programs.

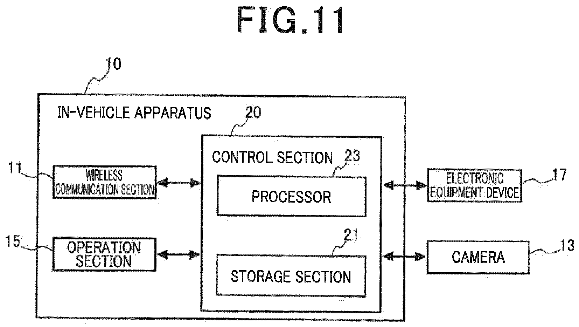

The configuration of the in-vehicle apparatus 10 may be a configuration shown in FIG. 11.

An in-vehicle apparatus 10 shown in FIG. 11 includes the wireless communication section 11, the operation section 15, and the control section 20, without including the camera 13 and the electronic equipment device 17. However, the camera 13 and the electronic equipment device 17 are connected to the control section 20, and operate in accordance with control by the control section 20.

Units of processing in the flowcharts shown in FIGS. 9 and 10 are units of processing divided based on main processing contents, to facilitate understanding of the processing performed by the server control section 110 of the server apparatus 100, and the present invention is not limited by a manner in which the units of processing are divided, or by names of the units of processing.

The processing performed by the server control section 110 can be divided into further more units of processing, based on processing contents, or can be divided such that one unit of processing includes further more processing. The order of processing in the above-mentioned flowcharts is not limited to the shown examples.

When an information processing method of the present invention is implemented by a computer, a program to be executed by the computer can be configured in a form of a recording medium, or a transmission medium that transmits the program. For the recording medium, a magnetic or optical medium, or a semiconductor memory device can be used. Specific examples of the recording medium include a flexible disk, an HDD (Hard Disk Drive), a CD-ROM (Compact Disk Read Only Memory), a DVD, a Blu-ray(R) Disc, and a magneto-optical disk. Another example of the recording medium is a removable recording medium such as a flash memory or a card recording medium, or a fixed recording medium. The recording medium may be a non-volatile storage device such as a RAM, a ROM, or an HDD that is an internal storage device included in the display device.

Reference signs list

1 Information communication system
3 Vehicle
5 Communication network
10 In-vehicle apparatus
11 Wireless communication section
13 Camera
15 Operation section
17 Electronic equipment device
20 Control section
21 Storage section
23 Processor
31 First segment
33 Second segment
51 First row
53 Second row
55 Third row
51a, 51b, 53a, 53b, 53c, 55a, 55b Seat
71, 73, 75 Curve
100 Server apparatus
101 Communication section
110 Server control section
120 Storage section
121 User information table
123 Face image table
125 Correction factors
130 Processor
131 Detection section
133 Determination section
135 Setting section

**Claims**

1. An information processing apparatus, **characterized by** comprising:

   a detection section (131) that divides a captured image, in a direction parallel to a longitudinal direction of a vehicle (3), into a first segment (31) including a driver seat and a second segment (33) including a front passenger seat and that detects a face image of an occupant riding in the vehicle (3) in each of the first segment and the second segment, the captured image being acquired by capturing an inside of a vehicle cabin of the vehicle, by a camera (13) whose pointing direction, angle of view and installation position are set such that the camera can capture faces of occupants seated; and [0013]
   a determination section (133) that, when a plurality of face images are detected in the first segment or the second segment by the detection section, determines a front-and-rear relationship between positions where respective occupants corresponding to the plurality of face images are seated, by comparing each of areas of the plurality of detected face images with a determination threshold value.

2. The information processing apparatus according to claim 1, further comprising a setting section (135) that sets the determination threshold value,
   wherein when the front-and-rear relationship between the positions where the respective occupants corresponding to the plurality of face images are seated cannot be determined as a result of comparing each of the areas of the plurality of detected face images with the determination threshold value, the setting section resets the determination threshold value.

3. The information processing apparatus according to claim 2, further comprising a storage section (120) that stores a plurality of face images detected from a plurality of the captured images,

   wherein the storage section stores a plurality of face images detected from one of the captured images in such a manner that the plurality of face images are classified into a front row and a rear row, based on a magnitude relationship between areas of the plurality of face images, and
   the setting section sets the determination threshold value, based on a distribution of areas of face images classified into the front row, and a distribution of areas of face images classified into the rear row.

4. The information processing apparatus according to claim 3, wherein the setting section

   generates a first normal distribution of the areas of the face images classified into the front row, based on an average value and a standard deviation of the areas of the face images classified into the front row,
   generates a second normal distribution of the areas of the face images classified into the rear row, based on an average value and a standard deviation of the areas of the face images classified into the rear row, and
   sets the determination threshold value, based on the generated first normal distribution and the generated second normal distribution.

5. The information processing apparatus according to claim 3, wherein

   the setting section sets a first determination threshold value and a second determination threshold value as the determination threshold values, the first determination threshold value used to determine a face image of an occupant seated on a seat in a first row and a face image of an occupant seated on a seat in a second row in the vehicle, the second determination threshold value used to determine a face image of an occupant seated on a seat in the second row and a face image of an occupant seated on a seat in a third row in the vehicle,
   the storage section stores three face images detected from one of the captured images in such a manner that the three face images are classified into the first row, the second row, and the third row, based on a magnitude relationship between areas of the face images, the first row being the front row, the second and third rows being the rear row, and
   the setting section
   generates a first normal distribution of areas of face images classified into the first row, based on an average value and a standard deviation of the areas of the face images classified into the first row,
   generates a second normal distribution of areas of face images classified into the second row, based on an average value and a standard deviation of the areas of the face images classified into the second row,
   generates a third normal distribution of areas of face images classified into the third row, based on an average value and a standard deviation of the areas of the face images classified into the third row, and

sets the first determination threshold value and the second determination threshold value, based on the generated first normal distribution, the generated second normal distribution, and the generated third normal distribution.

6. A program causing a computer to execute the following processing:

a detection procedure of dividing a captured image, in a direction parallel to a longitudinal direction of a vehicle (3), into a first segment (31) including a driver seat and a second segment (33) including a front passenger seat, and

detecting a face image of an occupant riding in the vehicle (3) in each of the first segment and the second segment, the captured image being acquired by capturing an inside of a vehicle cabin of the vehicle, by a camera (13) whose pointing direction, angle of view and installation position are set such that the camera can capture faces of occupants seated; and

a determination procedure of, when a plurality of face images are detected in the first segment or the second segment through the detection procedure, determining a front-and-rear relationship between positions where respective occupants corresponding to the plurality of face images are seated, by comparing each of areas of the plurality of detected face images with a determination threshold value.

7. An information processing method, **characterized by** comprising:

a detection step of dividing a captured image, in a direction parallel to a longitudinal direction of a vehicle (3), into a first segment (31) including a driver seat and a second segment (33) including a front passenger seat, and detecting a face image of an occupant riding in the vehicle (3) in each of the first segment and the second segment, the captured image being acquired by capturing an inside of a vehicle cabin of the vehicle, by a camera (13) whose pointing direction, angle of view and installation position are set such that the camera can capture faces of occupants seated; and

a determination step of, when a plurality of face images are detected in the first segment or the second segment in the detection step, determining a front-and-rear relationship between positions where respective occupants corresponding to the plurality of face images are seated, by comparing each of areas of the plurality of detected face images with a determination threshold value.

**Patentansprüche**

1. Informationsverarbeitungseinrichtung, **dadurch gekennzeichnet, dass** sie umfasst:

einen Erfassungsabschnitt (131), der ein aufgenommenes Bild, in einer Richtung parallel zu einer Längsrichtung eines Fahrzeugs (3), in ein erstes Segment (31), einschließlich eines Fahrersitzes, und ein zweites Segment (33), einschließlich eines Beifahrersitzes, unterteilt und der ein Gesichtsbild eines Insassen, der in dem Fahrzeug (3) fährt, in jedem des ersten Segments und des zweiten Segments erfasst, wobei das aufgenommene Bild durch Aufnehmen eines Innenraums einer Fahrzeugkabine des Fahrzeugs erlangt wird, durch eine Kamera (13), deren Zeigerichtung, Blickwinkel und Installationsposition derart eingestellt sind, dass die Kamera Gesichter von sitzenden Insassen aufnehmen kann; und [0013]

einen Bestimmungsabschnitt (133), der, wenn eine Vielzahl von Gesichtsbildern in dem ersten Segment oder dem zweiten Segment durch den Erfassungsabschnitt erfasst werden, eine Beziehung von vorne und hinten zwischen Positionen bestimmt, wo jeweilige Insassen, die der Vielzahl von Gesichtsbildern entsprechen, sitzen, durch Vergleichen jedes von Bereichen der Vielzahl von erfassten Gesichtsbildern mit einem Bestimmungsschwellenwert.

2. Informationsverarbeitungseinrichtung nach Anspruch 1, ferner umfassend einen Einstellabschnitt (135), der den Bestimmungsschwellenwert einstellt,

wobei, wenn die Beziehung von vorne und hinten zwischen den Positionen, wo die jeweiligen Insassen, die der Vielzahl von Gesichtsbildern entsprechen, sitzen, nicht als ein Ergebnis des Vergleichens jedes der Bereiche der Vielzahl von erfassten Gesichtsbildern mit dem Bestimmungsschwellenwert bestimmt werden kann, der Einstellabschnitt den Bestimmungsschwellenwert neu einstellt.

3. Informationsverarbeitungseinrichtung nach Anspruch 2, ferner umfassend einen Speicherabschnitt (120), der eine Vielzahl von Gesichtsbildern, die von einer Vielzahl der aufgenommenen Bilder erfasst werden, speichert,

wobei der Speicherabschnitt eine Vielzahl von Gesichtsbildern, die von einem der aufgenommenen Bilder erfasst werden, in einer derartigen Weise speichert, dass die Vielzahl von Gesichtsbildern in eine vordere Reihe und eine hintere Reihe, basierend auf einer Größenbeziehung zwischen Bereichen der Vielzahl von Gesichtsbildern, eingeordnet werden und

der Einstellabschnitt den Bestimmungsschwellenwert, basierend auf einer Verteilung von Bereichen von Gesichtsbildern, die in die vordere Reihe eingeordnet sind, und einer Verteilung von Bereichen von Gesichtsbildern, die in die hintere Reihe eingeordnet sind, einstellt.

4. Informationsverarbeitungseinrichtung nach Anspruch 3, wobei der Einstellabschnitt

eine erste Normalverteilung der Bereiche der Gesichtsbilder, die in die vordere Reihe eingeordnet sind, basierend auf einem Durchschnittswert und einer Standardabweichung der Bereiche der Gesichtsbilder, die in die vordere Reihe eingeordnet sind, erzeugt,

eine zweite Normalverteilung der Bereiche der Gesichtsbilder, die in die hintere Reihe eingeordnet sind, basierend auf einem Durchschnittswert und einer Standardabweichung der Bereiche der Gesichtsbilder, die in die hintere Reihe eingeordnet sind, erzeugt und

den Bestimmungsschwellenwert, basierend auf der erzeugten ersten Normalverteilung und der erzeugten zweiten Normalverteilung, einstellt.

5. Informationsverarbeitungseinrichtung nach Anspruch 3, wobei

der Einstellabschnitt einen ersten Bestimmungsschwellenwert und einen zweiten Bestimmungsschwellenwert als die Bestimmungsschwellenwerte einstellt, wobei der erste Bestimmungsschwellenwert verwendet wird, um ein Gesichtsbild eines Insassen, der auf einem Sitz in einer ersten Reihe sitzt, und ein Gesichtsbild eines Insassen, der auf einem Sitz in einer zweiten Reihe in dem Fahrzeug sitzt, zu bestimmen, wobei der zweite Bestimmungsschwellenwert verwendet wird, um ein Gesichtsbild eines Insassen, der auf einem Sitz in der zweiten Reihe sitzt, und ein Gesichtsbild eines Insassen, der auf einem Sitz in einer dritten Reihe in dem Fahrzeug sitzt, zu bestimmen,

der Speicherabschnitt drei Gesichtsbilder, die von einem der aufgenommenen Bilder erfasst werden, in einer derartigen Weise speichert, dass die drei Gesichtsbilder in die erste Reihe, die zweite Reihe und die dritte Reihe, basierend auf einer Größenbeziehung zwischen Bereichen der Gesichtsbilder, eingeordnet werden, wobei die erste Reihe die vordere Reihe ist, wobei die zweite und die dritte Reihe die hintere Reihe sind, und der Einstellabschnitt

eine erste Normalverteilung von Bereichen von Gesichtsbildern, die in die erste Reihe eingeordnet sind, basierend auf einem Durchschnittswert und einer Standardabweichung der Bereiche der Gesichtsbilder, die in die erste Reihe eingeordnet sind, erzeugt,

eine zweite Normalverteilung von Bereichen von Gesichtsbildern, die in die zweite Reihe eingeordnet sind, basierend auf einem Durchschnittswert und einer Standardabweichung der Bereiche der Gesichtsbilder, die in die zweite Reihe eingeordnet sind, erzeugt,

eine dritte Normalverteilung von Bereichen von Gesichtsbildern, die in die dritte Reihe eingeordnet sind, basierend auf einem Durchschnittswert und einer Standardabweichung der Bereiche der Gesichtsbilder, die in die dritte Reihe eingeordnet sind, erzeugt und

den ersten Bestimmungsschwellenwert und den zweiten Bestimmungsschwellenwert, basierend auf der erzeugten ersten Normalverteilung, der erzeugten zweiten Normalverteilung und der erzeugten dritten Normalverteilung, einstellt.

6. Programm, das einen Computer veranlasst, die folgende Verarbeitung auszuführen:

eine Erfassungsprozedur eines Unterteilens eines aufgenommenen Bilds, in einer Richtung parallel zu einer Längsrichtung eines Fahrzeugs (3), in ein erstes Segment (31), einschließlich eines Fahrersitzes, und ein zweites Segment (33), einschließlich eines Beifahrersitzes, und

eines Erfassens eines Gesichtsbilds eines Insassen, der in dem Fahrzeug (3) fährt, in jedem des ersten Segments und des zweiten Segments, wobei das aufgenommene Bild durch Aufnehmen eines Innenraums einer Fahrzeugkabine des Fahrzeugs erlangt wird, durch eine Kamera (13), deren Zeigerichtung, Blickwinkel und Installationsposition derart eingestellt sind, dass die Kamera Gesichter von Insassen aufnehmen kann; und

eine Bestimmungsprozedur eines, wenn eine Vielzahl von Gesichtsbildern in dem ersten Segment oder dem zweiten Segment über die Erfassungsprozedur erfasst werden, Bestimmens einer Beziehung von vorne und hinten zwischen Positionen, wo jeweilige Insassen, die der Vielzahl von Gesichtsbildern entsprechen, sitzen, durch Vergleichen jedes von Bereichen der Vielzahl von erfassten Gesichtsbildern mit einem Bestimmungsschwellenwert.

7. Informationsverarbeitungsverfahren, **dadurch gekennzeichnet, dass** es umfasst:

einen Erfassungsschritt des Unterteilens eines aufgenommenen Bilds, in einer Richtung parallel zu einer Längsrichtung eines Fahrzeugs (3), in ein erstes Segment (31), einschließlich eines Fahrersitzes, und ein zweites Segment (33), einschließlich eines Beifahrersitzes, und
des Erfassens eines Gesichtsbilds eines Insassen, der in dem Fahrzeug (3) fährt, in jedem des ersten Segments und des zweiten Segments, wobei das aufgenommene Bild durch Aufnehmen eines Innenraums einer Fahrzeugkabine des Fahrzeugs erlangt wird, durch eine Kamera (13), deren Zeigerichtung, Blickwinkel und Installationsposition derart eingestellt sind, dass die Kamera Gesichter von Insassen aufnehmen kann; und
einen Bestimmungsschritt des, wenn eine Vielzahl von Gesichtsbildern in dem ersten Segment oder dem zweiten Segment in dem Erfassungsschritt erfasst werden, Bestimmens einer Beziehung von vorne und hinten zwischen Positionen, wo jeweilige Insassen, die der Vielzahl von Gesichtsbildern entsprechen, sitzen, durch Vergleichen jedes von Bereichen der Vielzahl von erfassten Gesichtsbildern mit einem Bestimmungsschwellenwert.

**Revendications**

1. Appareil de traitement d'informations, **caractérisé en ce qu'**il comprend :

une section de détection (131) qui divise une image capturée, dans une direction parallèle à une direction longitudinale d'un véhicule (3), en un premier segment (31) comportant un siège conducteur et un second segment (33) comportant un siège passager avant et qui détecte une image de visage d'un occupant voyageant dans le véhicule (3) dans chacun parmi le premier segment et le second segment, l'image capturée étant acquise en capturant un intérieur d'un habitacle de véhicule du véhicule, par une caméra (13) dont la direction de pointage, l'angle de vue et la position d'installation sont réglés de telle sorte que la caméra peut capturer des visages d'occupants assis ; et [0013]
une section de détermination (133) qui, lorsqu'une pluralité d'images de visage sont détectées dans le premier segment ou le second segment par la section de détection, détermine une relation avant-arrière entre des positions où des occupants respectifs correspondant à la pluralité d'images de visage sont assis, en comparant chacune des aires de la pluralité d'images de visage détectées à une valeur seuil de détermination.

2. Appareil de traitement d'informations selon la revendication 1, comprenant en outre une section de réglage (135) qui règle la valeur seuil de détermination,
dans lequel lorsque la relation avant-arrière entre les positions où les occupants respectifs correspondant à la pluralité d'images de visage sont assis ne peut pas être déterminée en tant que résultat de comparaison de chacune des aires de la pluralité d'images de visage détectées à la valeur seuil de détermination, la section de réglage réinitialise la valeur seuil de détermination.

3. Appareil de traitement d'informations selon la revendication 2, comprenant en outre une section de stockage (120) qui stocke une pluralité d'images de visage détectées à partir d'une pluralité des images capturées,

dans lequel la section de stockage stocke une pluralité d'images de visage détectées à partir de l'une des images capturées d'une manière telle que la pluralité d'images de visage sont classées en une rangée avant et une rangée arrière, en fonction d'une relation d'ordre de grandeur entre les aires de la pluralité d'images de visage, et
la section de réglage règle la valeur seuil de détermination, en fonction d'une distribution d'aires d'images de visage classées dans la rangée avant, et une distribution d'aires d'images de visage classées dans la rangée arrière.

4. Appareil de traitement d'informations selon la revendication 3, dans lequel la section de réglage

génère une première distribution normale des aires des images de visage classées dans la rangée avant, en fonction d'une valeur moyenne et d'un écart type des aires des images de visage classées dans la rangée avant,
génère une deuxième distribution normale des aires des images de visage classées dans la rangée arrière, en fonction d'une valeur moyenne et d'un écart type des aires des images de visage classées dans la rangée arrière, et
règle la valeur seuil de détermination, en fonction de la première distribution normale générée et de la deuxième distribution normale générée.

**5.** Appareil de traitement d'informations selon la revendication 3, dans lequel

la section de réglage règle une première valeur seuil de détermination et une seconde valeur seuil de détermination en guise de valeurs seuils de détermination, la première valeur seuil de détermination utilisée pour déterminer une image de visage d'un occupant assis sur un siège dans une première rangée et une image de visage d'un occupant assis sur un siège dans une deuxième rangée du véhicule, la seconde valeur seuil de détermination utilisée pour déterminer une image de visage d'un occupant assis sur un siège dans la deuxième rangée et une image de visage d'un occupant assis sur un siège dans une troisième rangée dans le véhicule, la section de stockage stocke trois images de visage détectées à partir de l'une des images capturées d'une manière telle que les trois images de visage sont classées dans la première rangée, la deuxième rangée et la troisième rangée, en fonction d'une relation d'ordre de grandeur entre des aires des images de visage, la première rangée étant la rangée avant, les deuxième et troisième rangées étant la rangée arrière, et
la section de réglage
génère une première distribution normale d'aires des images de visage classées dans la première rangée, en fonction d'une valeur moyenne et d'un écart type des aires des images de visage classées dans la première rangée,
génère une deuxième distribution normale d'aires des images de visage classées dans la deuxième rangée, en fonction d'une valeur moyenne et d'un écart type des aires des images de visage classées dans la deuxième rangée,
génère une troisième distribution normale d'aires des images de visage classées dans la troisième rangée, en fonction d'une valeur moyenne et d'un écart type des aires des images de visage classées dans la troisième rangée, et
règle la première valeur seuil de détermination et la seconde valeur seuil de détermination, en fonction de la première distribution normale générée, de la deuxième distribution normale générée et de la troisième distribution normale générée.

**6.** Programme amenant un ordinateur à exécuter le traitement suivant :

une procédure de détection consistant à diviser une image capturée, dans une direction parallèle à une direction longitudinale d'un véhicule (3), en un premier segment (31) comportant un siège conducteur et un second segment (33) comportant un siège passager avant, et
à détecter une image de visage d'un occupant voyageant dans le véhicule (3) dans chacun parmi le premier segment et le second segment, l'image capturée étant acquise par la capture d'un intérieur d'un habitacle de véhicule du véhicule, par une caméra (13) dont la direction de pointage, l'angle de vue et la position d'installation sont réglés de telle sorte que la caméra peut capturer des visages d'occupants assis ; et
une procédure de détermination consistant à, lorsqu'une pluralité d'images de visage sont détectées dans le premier segment ou le second segment par l'intermédiaire de la procédure de détection, déterminer une relation avant-arrière entre des positions où des occupants respectifs correspondant à la pluralité d'images de visage sont assis, en comparant chacune des aires de la pluralité d'images de visage détectées à une valeur seuil de détermination.

**7.** Procédé de traitement d'informations, **caractérisé en ce qu'**il comprend :

une étape de détection consistant à diviser une image capturée, dans une direction parallèle à une direction longitudinale d'un véhicule (3), en un premier segment (31) comportant un siège conducteur et un second segment (33) comportant un siège passager avant, et
à détecter une image de visage d'un occupant voyageant dans le véhicule (3) dans chacun parmi le premier segment et le second segment, l'image capturée étant acquise par la capture d'un intérieur d'un habitacle de véhicule du véhicule, par une caméra (13) dont la direction de pointage, l'angle de vue et la position d'installation sont réglés de telle sorte que la caméra peut capturer des visages d'occupants assis ; et
une étape de détermination consistant à, lorsqu'une pluralité d'images de visage sont détectées dans le premier segment ou le second segment dans l'étape de détection, déterminer une relation avant-arrière entre des positions où des occupants respectifs correspondant à la pluralité d'images de visage sont assis, en comparant chacune des aires de la pluralité d'images de visage détectées à une valeur seuil de détermination.

# FIG.1

# FIG.2

# FIG.3

# FIG.4

100

110

SERVER CONTROL SECTION

PROCESSOR — 130

DETECTION SECTION — 131

DETERMINATION SECTION — 133

SETTING SECTION — 135

STORAGE SECTION — 120

USER INFORMATION TABLE — 121

FACE IMAGE TABLE — 123

CORRECTION FACTORS — 125

5

101

COMMUNICATION SECTION

# FIG.5

121

| IN-VEHICLE APPARATUS ID | USER INFORMATION | | | | |
|---|---|---|---|---|---|
| stu-opq | USER ID : ABCD | REGISTERED FACE IMAGE | USER ID : AAAA | REGISTERED FACE IMAGE |
| | PASSWORD : XXX | | PASSWORD : VVV | |
| efg-000 | USER ID : EFGH | REGISTERED FACE IMAGE | USER ID : BBBB | REGISTERED FACE IMAGE |
| | PASSWORD : YYY | | PASSWORD : SSS | |
| ⋮ | ⋮ | ⋮ | ⋮ | ⋮ |

# FIG.6

123

| IN-VEHICLE APPARATUS ID | FIRST-ROW FACE IMAGE | | | SECOND-ROW FACE IMAGE | | |
|---|---|---|---|---|---|---|
| stu-opq | | NUMBER OF PIXELS | 150342 | | NUMBER OF PIXELS | 33675 |
| | | NUMBER OF PIXELS | 140125 | | NUMBER OF PIXELS | 43144 |
| | ⋮ | ⋮ | ⋮ | ⋮ | ⋮ | ⋮ |
| efg-000 | | NUMBER OF PIXELS | 131873 | | NUMBER OF PIXELS | 67112 |
| | ⋮ | ⋮ | ⋮ | ⋮ | ⋮ | ⋮ |

# FIG.7

NUMBER OF OCCUPANTS

NUMBER OF PIXELS OF FACE IMAGE (Pix)

————— : NORMAL DISTRIBUTION OF AREAS OF FACE IMAGES CLASSIFIED INTO SECOND ROW

- - - - - - : NORMAL DISTRIBUTION OF AREAS OF FACE IMAGES CLASSIFIED INTO FIRST ROW

# FIG.8

NUMBER OF OCCUPANTS

NUMBER OF PIXELS OF FACE IMAGE (Pix)

——·——·——·— : SUM OF NORMAL DISTRIBUTIONS OF AREAS OF
FACE IMAGES CLASSIFIED INTO FIRST ROW AND SECOND ROW

# FIG.9

START

↓

S1 — IS IDENTIFICATION REQUEST RECEIVED ?
— NO (loops back)
— YES ↓

S2 — ACQUIRE IN-VEHICLE APPARATUS ID

↓

S3 — IS CONFIDENCE VALUE HIGHER THAN REFERENCE VALUE ?
— NO →
— YES ↓

S4 — IS FACE IMAGE DETECTED ?
— NO →
— YES ↓

S5 — REQUEST RETRANSMISSION OF CAPTURED IMAGE

S6 — CALCULATE AREA OF DETECTED FACE IMAGE

↓

S7 — ARE TWO FACE IMAGES DETECTED IN ONE SEGMENT ?
— NO →
— YES ↓

S8 — DETERMINE FRONT-AND-REAR RELATIONSHIP BETWEEN FACE IMAGES, BASED ON DETERMINATION THRESHOLD VALUE

↓

S9 — DOES DETERMINATION SUCCEED ?
— NO →
— YES ↓

S10 — IDENTIFY OCCUPANT

↓

S11 — NOTIFY USER ID

S12 — DETECT FACE IMAGE

↓

S13 — ARE TWO FACE IMAGES DETECTED IN ONE SEGMENT ?
— NO →
— YES ↓

S14 — CALCULATE AREAS OF FACE IMAGES, RESPECTIVELY

↓

S15 — SET DETERMINATION THRESHOLD VALUE

↓

S16 — IS ERROR OUTPUT ?
— YES →
— NO ↓

S17 — UPDATE DETERMINATION THRESHOLD VALUE

↓

S18 — CALCULATE CONFIDENCE VALUE

↓

S19 — STORE CONFIDENCE VALUE IN ASSOCIATION WITH IN-VEHICLE APPARATUS ID

↓

S20 — NOTIFY "UNDER LEARNING"

↓

RETURN

# FIG.10

```
           ┌─────────────┐
           │  STEP S15   │
           └──────┬──────┘
                  │
                  ▼
```

ACQUIRE FACE IMAGES ASSOCIATED WITH
IN-VEHICLE APPARATUS ID, AND
THE NUMBERS OF PIXELS — S151

CALCULATE AVERAGE VALUES AND STANDARD
DEVIATIONS OF AREAS OF FACE IMAGES IN
FIRST ROW AND SECOND ROW, RESPECTIVELY — S152

CALCULATE PROBABILITY DENSITY
FUNCTIONS FOR FIRST ROW AND
SECOND ROW, RESPECTIVELY — S153

GENERATE CURVES REPRESENTING NORMAL
DISTRIBUTIONS FOR FIRST ROW AND
SECOND ROW, RESPECTIVELY — S154

GENERATE CURVE REPRESENTING SUM OF
CURVE OF NORMAL DISTRIBUTION FOR
FIRST ROW AND CURVE OF
NORMAL DISTRIBUTION FOR SECOND ROW — S155

DETECT THE NUMBER OF PIXELS AT
WHICH THE NUMBER OF OCCUPANTS TAKES
MINIMUM VALUE — S156

IS THE NUMBER OF PIXELS AT
WHICH MINIMUM VALUE IS TAKEN DETECTED ? — S157

NO

YES

SET THE DETECTED NUMBER OF PIXELS AS
DETERMINATION THRESHOLD VALUE — S158

OUTPUT ERROR — S159

```
           ┌─────────────┐
           │  STEP S16   │
           └─────────────┘
```

# FIG.11

IN-VEHICLE APPARATUS  10  20

CONTROL SECTION  23

WIRELESS COMMUNICATION SECTION  11

OPERATION SECTION  15

PROCESSOR

STORAGE SECTION  21

ELECTRONIC EQUIPMENT DEVICE  17

CAMERA  13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146043 A
- JP 2008199515 B